# FASCICULE DE BREVET EUROPEEN

(11) **EP 2 577 181 B1**
(45) Date de publication et mention de la délivrance du brevet: **21.11.2018**
(21) Numéro de dépôt: 11723030.0
(22) Date de dépôt: 25.05.2011
(51) Int. Cl.: F28F 13/12, F24S 10/00, B21D 53/02

(54) **MODULE POUR ABSORBEUR THERMIQUE DE RECEPTEUR SOLAIRE, ABSORBEUR COMPORTANT AU MOINS UN TEL MODULE ET RECEPTEUR COMPORTANT AU MOINS UN TEL ABSORBEUR**
MODUL FÜR EINEN WÄRMEABSORBER EINES SOLAREMPFÄNGER MIT MINDESTENS EINEM DERARTIGEN MODUL UND EMPFÄNGER MIT MINDESTENS EINEM DERARTIGEN ABSORBER
MODULE FOR A THERMAL ABSORBER OF A SOLAR RECEIVER, ABSORBER COMPRISING AT LEAST ONE SUCH MODULE AND RECEIVER COMPRISING AT LEAST ONE SUCH ABSORBER

(30) Priorité: 27.05.2010 FR 1054067
(43) Date de publication de la demande: 10.04.2013
(73) Titulaire: Commissariat à l'Énergie Atomique et aux Énergies Alternatives, 75015 Paris (FR)
(72) Inventeur: FOURMIGUE, Jean-François, F-38600 Fontaine (FR); BRUCH, Arnaud, F-69560 Sainte Colombe (FR); CIGNA, Julien, F-38630 Sassenage (FR); COUTURIER, Raphaël, F-38360 Sassenage (FR); ROUX, Guilhem, F-38120 Saint-Egreve (FR)
(74) Mandataire: Ilgart, Jean-Christophe
(86) Numéro de dépôt international: PCT/EP2011/058568
(87) Numéro de publication internationale: WO 2011/147874

(56) Documents cités:
- EP-A2- 2 112 441
- WO-A1-2009/121174
- DE-A1- 3 306 800
- DE-A1- 3 731 669
- US-A- 4 154 222
- US-A- 4 266 531

## Description

### DOMAINE TECHNIQUE ET ART ANTÉRIEUR

La présente invention se rapporte à un absorbeur thermique pour récepteur solaire de centrale solaire et à un récepteur solaire pour centrale solaire comportant au moins un tel absorbeur, en particulier pour une centrale solaire à concentration de type Fresnel.

La technologie solaire thermique à concentration consiste à utiliser le rayonnement solaire pour chauffer un fluide caloporteur servant de source chaude dans un cycle thermodynamique. La concentration permet d'atteindre des températures plus ou moins élevées et ainsi de bénéficier de rendements de conversion thermodynamiques plus ou moins importants. Les technologies développées se distinguent par leur moyens de concentration des rayons solaires mis en oeuvre, par les moyens de transport de la chaleur, et éventuellement de stockage de la chaleur qui sont utilisés, i.e. le fluide caloporteur utilisé et des moyens de conversion thermodynamique qui sont par exemple des turbines à vapeur, des turbines à gaz ou des moteurs Stirling.

Il existe typiquement quatre familles de systèmes solaires à concentration ("Concentrating Solar Power" ou CSP en anglais) :
- les collecteurs cylindro-paraboliques à foyer linéaire,
- les concentrateurs linéaires de Fresnel,
- les systèmes à tour à récepteur central, et
- les paraboles à foyer mobile.

Chaque système solaire à concentration comporte un récepteur solaire ayant pour fonction de transférer à un fluide, tel que l'eau, l'huile ou un gaz, la chaleur du rayonnement solaire. Ce récepteur solaire forme donc un échangeur de chaleur. Cet échangeur est formé d'un ou de plusieurs tubes placés en parallèle dans lesquels circule le fluide caloporteur.

Dans le cas particulier d'une centrale solaire à concentration de type Fresnel, le récepteur solaire reçoit les rayons lumineux réfléchis par des miroirs et les transmet au fluide caloporteur sous forme de chaleur.

Un récepteur solaire comporte typiquement :
- un absorbeur qui reçoit le flux solaire sur sa face inférieure et dans lequel circule le fluide caloporteur,
- éventuellement une couche d'un matériau isolant thermique permettant de limiter les pertes thermiques depuis l'absorbeur vers l'extérieur,
- éventuellement un panneau vitré permettant d'isoler l'absorbeur du milieu extérieur et délimitant une cavité fermée entre l'absorbeur et la vitre.

Dans un tel dispositif, le flux reçu par l'absorbeur est très hétérogène sur la largeur de l'absorbeur et dans la longueur de l'absorbeur. Cette hétérogénéité provient notamment :
- du fait que le flux concentré est obtenu par la superposition de flux unitaires de chaque miroir de part et d'autre du récepteur, chaque miroir produisant une tâche solaire sur l'absorbeur avec une focalisation et un flux variables en fonction de la position du soleil au cours de la journée ;
- des erreurs de positionnement des miroirs et de focalisation liées à la fabrication et la précision de mise en mouvement des miroirs ;
- du passage d'un nuage sur le champ solaire qui induit une brusque variation de flux.

La surface de l'absorbeur qui reçoit le flux est généralement recouverte d'un revêtement de surface sélectif qui absorbe l'énergie solaire tout en ayant une émissivité faible dans l'infrarouge limitant les pertes par réémission infrarouge. Ce revêtement est par exemple une peinture noire. La durée de vie de ce traitement de surface est un paramètre important pour la performance de la centrale solaire. Or ce traitement de surface sélectif peut être dégradé thermiquement, il est donc important d'éviter l'apparition de points chauds.

Un absorbeur pour récepteur solaire de type Fresnel est par exemple décrit dans les documents US 2009/0056703 A1 et US2009/0084374 A1. L'absorbeur est formé par une pluralité de tubes disposés les uns à côté des autres afin de transférer l'énergie du flux solaire concentré au fluide. Les tubes sont particulièrement adaptés pour des fluides sous pression comme la vapeur. Cependant, le flux solaire concentré étant très hétérogène sur la largeur de l'absorbeur et, éventuellement, dans la longueur des tubes, le fluide s'échauffe différemment suivant les tubes. Les fluides sortant des différents tubes n'étant pas à la même température, une zone de remélange est alors requise.

De plus, les zones situées entre les tubes qui reçoivent également le flux solaire concentré ne sont pas utilisées pour chauffer du fluide, l'efficacité du récepteur n'est donc pas optimale.

Par ailleurs, dans les zones de l'absorbeur où le flux solaire est potentiellement très concentré, par exemple du fait d'une erreur de focalisation des miroirs, la température de paroi du tube augmente brusquement et le traitement de surface sélectif appliqué sur le tube risque une dégradation rapide, et donc une chute de performance du récepteur solaire.

DE 33 06 800 montre un module pour la réalisation d'un absorbeur thermique pour tour solaire, d'axe longitudinal (X), comportant plusieurs conduits délimité par une première paroi sensiblement plane munie d'une face destinée à être soumise à un flux lumineux (F), une deuxième paroi en regard de la première paroi et des parois latérales reliant lesdites première et deuxième parois, ledit module étant délimité au niveau de ses extrémités longitudinales par des plans transversaux d'extrémité au niveau desquels ledit module est destiné à être connecté à des modules amont et/ou aval et/ou à des collecteurs d'alimentation et/ou d'évacuation d'un fluide caloporteur destiné à s'écouler dans le module, ledit fluide caloporteur étant sous pression.

C'est par conséquent un but de la présente invention d'offrir un absorbeur solaire dont l'efficacité, même dans le cas d'un flux lumineux hétérogène, est augmentée et présentant des risques réduits d'apparition de points chauds.

### EXPOSÉ DE L'INVENTION

Le but précédemment énoncé est atteint par un module pour la réalisation d'un absorbeur pour récepteur solaire de centrale thermique comportant une paroi sensiblement plane dont la face extérieure est destinée à recevoir le flux lumineux, une paroi en regard de ladite paroi et des parois latérales, lesdites parois définissant un canal unique de circulation d'un fluide caloporteur sous pression, la paroi dont la face est destinée à recevoir le flux lumineux et la paroi en regard de cette dernière étant reliées mécaniquement par des moyens disposés dans l'écoulement du fluide, de sorte à assurer une tenue en pression de l'absorbeur. Le module selon l'invention comporte également des moyens assurant un remélange du fluide dans le canal unique, homogénéisant la température du fluide et évitant l'apparition de points chauds. Ces moyens permettent un écoulement du fluide caloporteur dans des directions inclinées par rapport à l'axe longitudinal du module, lesdites directions inclinées étant orientées vers les parois latérales.

De manière particulièrement avantageuse, les éléments reliant mécaniquement les deux parois forment également des déflecteurs pour le fluide de sorte à assurer le remélange du fluide au sein du module.

Préférentiellement, les deux parois reliées mécaniquement sont reliées par un élément central unique sensiblement aligné avec l'axe longitudinal de l'absorbeur, dans lequel sont réalisées des fenêtres assurant la circulation du fluide d'un côté à l'autre de l'élément central. De manière encore plus préférentielle, des ailettes sont prévues pour forcer le fluide à emprunter les fenêtres et ainsi changer de direction.

L'absorbeur selon la présente invention comporte un ou plusieurs modules selon la présente invention mis bout à bout et des collecteurs en amont et en aval pour une connexion à un circuit d'alimentation en liquide ou à d'autres absorbeurs.

De manière particulièrement avantageuse, les éléments reliant mécaniquement les deux parois forment également des déflecteurs pour le fluide de sorte à assurer le remélange du fluide au sein du module.

Préférentiellement, les deux parois reliées mécaniquement sont reliées par un élément central unique sensiblement aligné avec l'axe longitudinal de l'absorbeur, dans lequel sont réalisées des fenêtres assurant la circulation du fluide d'un côté à l'autre de l'élément central. De manière encore plus préférentielle, des ailettes sont prévues pour forcer le fluide à emprunter les fenêtres et ainsi changer de direction.

L'absorbeur selon la présente invention comporte un ou plusieurs modules selon la présente invention mis bout à bout et des collecteurs en amont et en aval pour une connexion à un circuit d'alimentation en liquide ou à d'autres absorbeurs.

En d'autres termes, l'absorbeur selon la présente invention est un échangeur de chaleur comportant un conduit unique, utilisé pour la captation d'un flux d'énergie solaire concentré sur une seule de ses faces et particulièrement adapté à un flux présentant une grande variabilité dans la largeur et la longueur de la face exposée. Cet échangeur transfère ce flux à un fluide caloporteur en assurant une fonction de mélange interne afin d'homogénéiser la température de sortie du fluide et la température de paroi, ce qui évite la dégradation thermique du fluide et du revêtement de surface sur la face exposée au flux.

La présente invention a alors pour objet un module pour la réalisation d'un absorbeur thermique pour récepteur solaire de centrale solaire, suivant l'objet de la revendication 1.

Le fluide caloporteur est un liquide.

De préférence, la pression du caloporteur dans le module est comprise entre 2 Bar et 6 Bar.

Par exemple, les moyens pour permettre la circulation dans des directions inclinées par rapport à celles de l'axe longitudinal comportent des déflecteurs repartis dans le volume du module et provoquant un changement de direction du fluide.

Dans un exemple avantageux, le module selon l'invention comporte au moins une nervure s'étendant longitudinalement fixée à la première et à la deuxième paroi, ladite nervure comportant des fenêtres et des déflecteurs associés aux fenêtres, lesdits déflecteurs imposant à une partie du fluide d'emprunter lesdites fenêtres.

Selon une caractéristique supplémentaire, ladite au moins une nervure s'étend longitudinalement sur toute la longueur dudit module, délimitant deux demi-canaux en communication fluidique.

Par exemple, la nervure est réalisée à partir d'une bande en alliage métallique dans laquelle sont découpés les déflecteurs, lesdits déflecteurs étant pliés de sorte à être inclinés par rapport à l'axe longitudinal et libérant les fenêtres

De préférence, deux déflecteurs successifs sont situés d'un côté et de l'autre du plan de la nervure.

La nervure peut être soudée par un côté à la face intérieure de la première paroi, ladite nervure comportant sur son côté soudé à la deuxième paroi des créneaux pénétrant dans des encoches réalisées dans ladite deuxième paroi.

Le module peut présenter une forme sensiblement parallélépipédique rectangle, les première et deuxième parois présentant des plus grandes surfaces.

La face destinée à être soumise au flux lumineux comporte avantageusement un revêtement améliorant l'absorption du flux lumineux. Le revêtement a de préférence des propriétés de faible émissivité infrarouge.

La présente invention a également pour objet un absorbeur thermique pour récepteur solaire de centrale solaire comportant un ou plusieurs modules selon la présente invention, les modules étant connectés en série de manière étanche, ledit absorbeur comportant à une première extrémité longitudinale, un collecteur d'alimentation en fluide caloporteur et, à une deuxième extrémité longitudinale, un collecteur d'évacuation du fluide caloporteur.

La présente invention a également pour objet un récepteur solaire comportant au moins un absorbeur selon la présente invention et une jupe formée de deux panneaux inclinés en éloignement de l'axe longitudinal disposés de part et d'autre de l'absorbeur par rapport à l'axe longitudinal, ladite jupe redirigeant le flux lumineux sur l'absorbeur.

Le récepteur peut comporter des moyens d'isolation thermique disposés à l'extérieur de l'absorbeur sur la deuxième paroi et sur les côtés de celui-ci.

Le récepteur est de préférence de type Fresnel.

La présente invention a également pour objet un procédé de fabrication d'un absorbeur selon la présente invention, comportant les étapes de :
- fabrication d'un ou plusieurs modules,
- fixation des moyens de liaison mécanique aux première et deuxième parois et mise en place des moyens pour permettre la circulation dans des directions inclinées par rapport à l'axe longitudinal,
- d'assemblage des collecteurs d'alimentation et d'évacuation aux extrémités de l'ensemble formé par le module ou les modules.

Les moyens de liaison mécanique et les moyens pour permettre la circulation dans des directions inclinées par rapport à celle de l'axe longitudinal sont réalisés, par exemple à partir d'une bande en alliage métallique :
- par découpe d'ailettes dans la bande, lesdites ailettes étant rattachées par un côté à la bande, et
- par pliage desdites ailettes de sorte à ce qu'elles forment un angle avec le plan de la bande, la réalisation desdites ailettes formant simultanément des fenêtres dans la bande.

La fixation des moyens de liaison mécanique se fait par exemple par soudage.

Le procédé de fabrication selon l'invention comporte avantageusement une étape de traitement de surface de la face extérieure de la première paroi. Ledit traitement de surface peut être réalisé en déposant une couche de peinture sur ladite face après la fabrication du ou des modules.

La présente invention a également pour objet un procédé de fabrication d'un récepteur solaire, ledit procédé comportant :
- l'étape de fabrication d'une pluralité d'absorbeurs par le procédé de fabrication selon la présente invention,
- l'étape de connexion étanche par soudage desdits absorbeurs au niveau des collecteurs.

### BRÈVE DESCRIPTION DES DESSINS

La présente invention sera mieux comprise à l'aide de la description qui va suivre et des dessins en annexes dans lesquels :
- la figure 1 est une vue en perspective en transparence d'un exemple de réalisation d'un absorbeur selon la présente invention,
- la figure 2 est une vue en coupe transversale de l'absorbeur de la figure 1,
- la figure 3A est une vue d'un élément isolé de l'absorbeur de la figure 2,
- la figure 3B est une vue agrandie de la figure 3A,
- la figure 3C est une vue de dessus du détail de la figure 3B,
- figure 4 est une représentation schématique d'une variante de réalisation d'un absorbeur selon la présente invention,
- la figure 5 est une vue en coupe transversale schématique d'un exemple de réalisation d'un récepteur solaire selon la présente invention,
- la figure 6 est une représentation schématique partielle d'une centrale solaire de type Fresnel selon la présente invention.

### EXPOSÉ DÉTAILLÉ DE MODES DE RÉALISATION PARTICULIERS

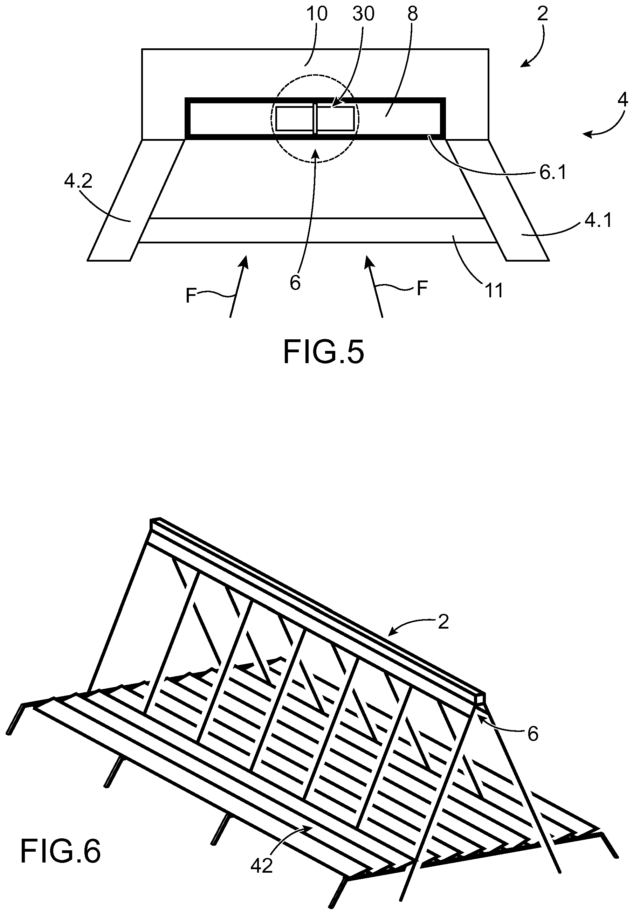

Nous allons tout d'abord décrire brièvement un récepteur solaire dans lequel peut être monté un absorbeur solaire selon la présente invention. Un tel récepteur solaire est représenté sur la figure 5.

Le récepteur solaire 2 comporte une jupe 4 formée par deux panneaux 4.1, 4.2 définissant, vus en coupe transversale, un espace trapézoïdal, dans le fond duquel est disposé un absorbeur 6. La jupe 4 redirige avantageusement le flux lumineux provenant de miroirs 42 (sur la figure 6) sur l'absorbeur 6, plus particulièrement sur une face 6.1 extérieure d'une paroi inférieure de l'absorbeur. Le flux lumineux est symbolisé par les flèches F.

Le récepteur solaire fait partie d'une centrale thermique et assure le transfert de la chaleur du flux lumineux vers le liquide.

L'absorbeur 6 délimite un canal 8 dans lequel un fluide caloporteur est destiné à circuler dans une direction sensiblement perpendiculaire au plan de la feuille dans la représentation de la figure 5.

De manière avantageuse, des moyens d'isolation thermique 10 sont prévus sur la paroi supérieure et sur les côtés de l'absorbeur 6 afin de limiter les pertes thermiques depuis l'absorbeur vers l'extérieur, plus particulièrement du fluide caloporteur échauffé par le flux lumineux vers l'extérieur.

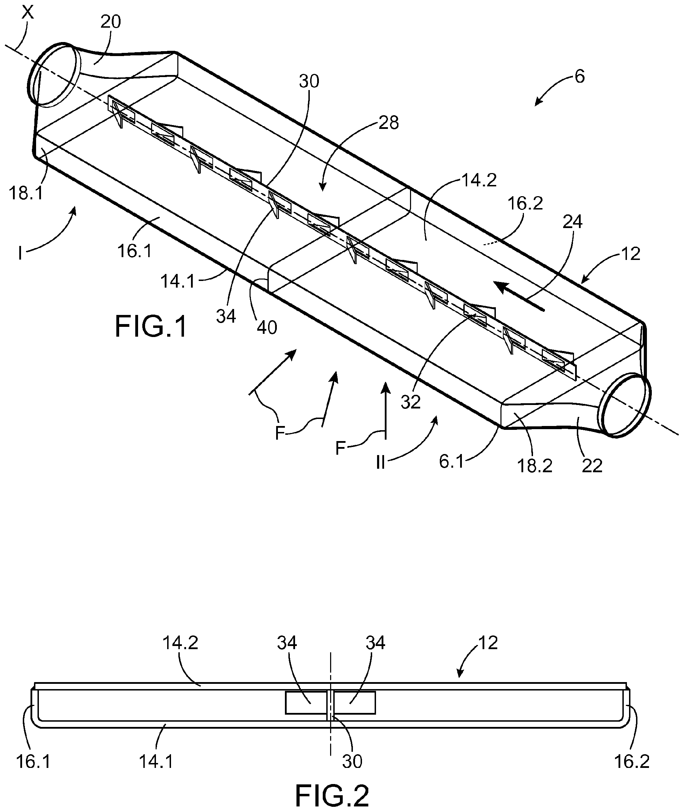

On peut prévoir une plaque transparente 11, par exemple en verre, disposée en amont de l'absorbeur dans le sens du flux lumineux pour créer une cavité fermée et limiter les pertes par convection. Nous allons maintenant décrire en détail un exemple de réalisation d'un absorbeur 6 selon la présente invention représenté sur la figure 1.

L'absorbeur 6 comporte un boîtier 12 de forme sensiblement parallélépipédique s'étendant selon un axe longitudinal X. Le boîtier comporte deux parois longitudinales 14.1, 14.2 de plus grande surface, deux parois longitudinales latérales 16.1, 16.2 reliant les deux parois longitudinales de plus grandes surfaces 14.1, 14.2. Le boîtier est délimité au niveau de ses extrémités longitudinales par deux plans transversaux d'extrémité 18.1, 18.2.

Le boîtier peut comporter un ou plusieurs modules, dans l'exemple représenté il en comporte deux. Les absorbeurs présentent généralement une très grande longueur, par exemple plusieurs centaines de mètres, ils comportent donc le plus souvent plusieurs modules. Cette réalisation sous forme de modules permet de simplifier la fabrication.

Une des parois longitudinales de plus grande surface 14.1 est destinée à être illuminée par le flux lumineux F. Celle-ci est située dans la partie inférieure pour recevoir le flux lumineux renvoyé par les miroirs, cette paroi sera désignée dans la suite de la description par "paroi inférieure", la paroi opposée sera, quant à elle, désignée par "paroi supérieure ".

L'absorbeur comporte également un collecteur d'alimentation 20 en fluide caloporteur "froid" connecté au boîtier au niveau de l'un des plans transversaux d'extrémité, et un collecteur d'évacuation 22 du fluide caloporteur échauffé après avoir traversé tout l'absorbeur connecté au boîtier au niveau du plan transversal opposé. Les collecteurs 20, 22 sont connectés à un réseau de fluide de la centrale solaire.

Le fluide caloporteur s'écoule le long de l'axe longitudinal X, du collecteur d'alimentation 20 au collecteur d'évacuation 22 suivant le sens symbolisé par la flèche 24. Le fluide caloporteur est un liquide.

Dans l'exemple représenté sur la figure 1, la section du boîtier est rectangulaire, cependant cette forme n'est en aucun cas limitative. En effet, on pourrait prévoir que la section soit par exemple trapézoïdale, les deux parois latérales étant alors inclinées et la base étant formée par la paroi 14.1. On pourrait prévoir que les parois 14.1 et 14.2 ne soient pas parallèles ou pour le moins comportent des portions non parallèles. On pourrait même envisager que la section transversale du boîtier ne soit pas un quadrilatère, mais un triangle ou un polygone à au moins cinq côtés. Selon la présente invention, le boîtier de l'absorbeur 6 délimite le canal 8 dont une face extérieure 6.1 est soumise au flux lumineux F. Des moyens de liaison mécanique 28 entre les parois longitudinales de plus grandes surfaces 14.1, 14.2 sont prévus afin d'assurer une tenue à la pression du boîtier.

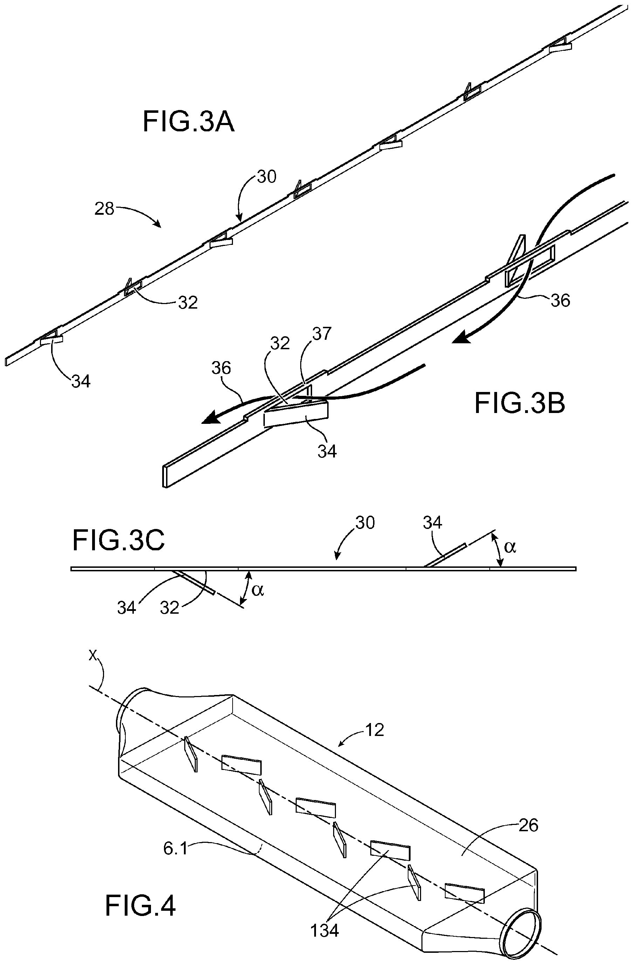

Dans l'exemple représenté, ces moyens de liaison mécanique 28 sont formés par une nervure 30 positionnée sensiblement le long de l'axe longitudinal X et fixée sur les parois longitudinales de plus grande surface 14.1 14.2. La nervure est plus particulièrement visible sur les figures 3A à 3C.

La nervure 30 est ajourée pour permettre le passage du fluide d'un côté à l'autre de la nervure et assurer un remélange du fluide.

De manière avantageuse, l'absorbeur comporte des moyens améliorant le mélange en provoquant un changement de direction d'écoulement du fluide par rapport à la direction longitudinale de sorte à ce que la température du fluide au sein du canal soit sensiblement homogène et à ce que l'apparition de points chauds soit évitée. Par point chaud, on entend en particulier dans le cadre de cette invention, une zone soumise à un flux solaire plus important sur une surface s'étendant de façon longitudinale le long de l'absorbeur.

Dans l'exemple représenté, et de manière avantageuse, la nervure est percée de fenêtres 32 et munie de déflecteurs 34 de fluide de sorte à provoquer le passage du fluide d'un côté à l'autre de la nervure 30.

De manière particulièrement avantageuse, les déflecteurs sont formés par des ailettes découpées dans la nervure réalisant simultanément les fenêtres 32.

En outre, dans l'exemple représenté, le sens d'inclinaison de déflecteurs est tel qu'il assure une déflection du flux vers la face opposée de la nervure. Le changement de direction du flux est symbolisé par les flèches 36 sur la figure 3B.

Comme on peut le voir sur les figures 3A et 3B, deux ailettes se suivant sont avantageusement situées chacune d'un côté de la nervure 30 de sorte que le fluide soit envoyé alternativement d'un côté et de l'autre de la nervure, opérant ainsi le remélange.

Ainsi, la présence de la nervure de rigidification n'a pas pour effet de diviser le canal 8 en deux canaux indépendants, mais permet une circulation du fluide entre les deux sous-canaux et donc une homogénéisation de la température. Ainsi, si un côté de la plaque 14.1 en face d'un des sous-canaux est plus éclairé que l'autre, impliquant donc potentiellement un échauffement plus important du fluide circulant dans ce sous-canal, le mélange évite l'apparition de ce différentiel de température. En outre, la température des parois est homogénéisée, réduisant les déformations du boîtier par dilatation.

De préférence, le boîtier de l'absorbeur est réalisé en tôle métallique ainsi que la nervure qui est alors soudée sur les deux parois longitudinales de plus grande surface.

Dans l'exemple représenté, la nervure 30 comporte sur son bord supérieur du côté de la paroi 14.2 du boîtier, des créneaux 37 en saillie pénétrant dans des encoches pratiquées dans la paroi supérieure 14.2 afin d'assurer un bon ancrage de la nervure.

La nervure 30 est alors soudée sur la face intérieure de la paroi 14.1 inférieure, ce qui ne dégrade pas sa face extérieure 6.1 soumise au flux lumineux et les créneaux 37 traversent la paroi supérieure 14.2 et sont soudées à celle-ci de manière étanche. Il est à noter que l'état de surface de la face extérieure 6.1 de la paroi supérieure 14.2 n'intervient pas dans le fonctionnement de l'absorbeur.

Le pas des fenêtres 32 et l'angle d'inclinaison α des ailettes 34 sont choisis en fonction des conditions d'écoulement du fluide dans l'absorbeur 6.

Dans l'exemple représenté, une seule nervure 30 est prévue dans le canal 8. On peut envisager de disposer n nervures parallèles, n étant un entier positif, s'étendant sur toute la longueur du canal et définissant n + 1 sous-canaux en communication. Ainsi la tenue à la pression de l'absorbeur est encore augmentée.

En outre, dans l'exemple représenté, la nervure s'étend sur toute la longueur de l'axe longitudinal. On peut, à l'inverse, prévoir de disposer plusieurs nervures de longueur réduite disposées parallèlement à l'axe longitudinal et réparties dans tout le volume du conduit de sorte à former des éléments de rigification et de mélange dans tout le volume. Ces éléments sont par exemple répartis uniformément. On peut également prévoir de répartir une pluralité de déflecteurs 134 uniques dans tout le volume du conduit 8, telle que cela est schématisé sur la figure 4. Les déflecteurs sont alors par exemple formés par des plaques métalliques soudées sur les deux parois longitudinales de plus grande surface et inclinées par rapport à l'axe longitudinal X.

On peut également envisager de dissocier les moyens de liaison mécanique et les moyens de déflection. Pour cela on peut utiliser des tiges reliant mécaniquement les deux parois longitudinales de plus grande surface, celles-ci ayant peu d'effet sur l'écoulement du fluide. Les moyens déflecteurs seraient formés par exemple par des plaques inclinées par rapport à l'axe longitudinal. Les plaques pourraient alors n'être fixées que sur l'une ou l'autre des parois longitudinales de plus grandes surfaces.

On pourrait également envisager une nervure ajourée telle que représentée sur la figure 3A, mais ne comportant pas d'ailettes, les ailettes étant fixées séparément dans le volume du canal et orientées pour assurer un écoulement du fluide à travers les fenêtres de la nervure.

Selon l'invention, la face 6.1 de l'absorbeur 6 recevant le flux lumineux est plane, elle peut alors aisément subir un traitement de surface pour lui assurer une bonne captation du flux lumineux, l'objectif étant d'obtenir une absorption totale du flux lumineux incident, i.e. une émissivité dans le visible proche de 1 et une réémission dans l'infrarouge nulle, i.e. une émissivité dans l'infrarouge proche de 0. Le traitement est par exemple réalisé sur la face inférieure du boîtier une fois celui-ci assemblé en appliquant une couche de peinture sélective, ou alors préalablement à l'assemblage du boîtier en réalisant un dépôt en bain, par exemple de type Chrome noir sur la tôle destinée à former la paroi inférieure 14.1. L'absorbeur selon la présente invention est particulièrement adapté à un fonctionnement à une pression inférieure à 10 bar, plus particulièrement à une pression absolue comprise entre 2 Bar et 6 Bar, par exemple entre 3 Bar et 6 Bar à des températures maximales de 400 °C, et encore plus particulièrement à un fonctionnement à une pression de l'ordre de 3 Bar et à une température de l'ordre 300 °C.

Le fluide caloporteur peut être de l'eau ou de manière plus avantageuse de l'huile thermique couramment utilisée dans les centrales solaires à concentration comme le Therminol 66® ou le Therminol VP1®. Le fluide caloporteur peut circuler dans l'absorbeur à une vitesse de l'ordre de 0,2 m/s à 2 m/s.

Le boîtier de l'absorbeur est réalisé par exemple avec des tôles d'alliage métallique d'épaisseur millimétrique soudées de manière étanche. De tels alliages peuvent être de l'acier inox 304 ou acier inox 316 ou encore un acier résistant à la pression tel le P265GH et le P295GH.

Comme indiqué précédemment, les récepteurs solaires de centrales solaires de puissance présentent généralement des longueurs de plusieurs centaines de mètres. Pour cela, les boîtiers sont de préférence fabriqués à partir d'une pluralité de modules, que l'on dispose bout à bout et que l'on assemble par une soudure étanche 40 (figure 1). Par exemple chaque module peut mesurer 2,5 m de long. Chaque module comporte une nervure, qui après assemblage est alignée avec celles des autres modules.

Grâce à l'invention, on peut alors fabriquer des modules standard puis les raccorder pour former un boîtier sur lequel sont rapportés des collecteurs d'alimentation et d'évacuation formant un absorbeur. Cette réalisation sous forme de modules standard permet d'automatiser la fabrication et d'obtenir une réduction des prix de revient de fabrication.

A titre d'exemple, un absorbeur selon la présente invention peut mesurer 50 m de long.

On peut prévoir de connecter plusieurs absorbeurs en série, le collecteur d'évacuation de l'absorbeur en amont étant alors connecté au connecteur d'alimentation de l'absorbeur en aval. Le passage d'un absorbeur à l'autre peut par exemple permettre de disposer l'absorbeur aval dans une direction différente de l'absorbeur amont.

L'absorbeur selon la présente invention est particulièrement adapté à la réalisation d'un récepteur solaire de type Fresnel. Sur la figure 6, on peut voir une central de type Fresnel comportant au moins un récepteur solaire selon la présente invention. La pluralité d'absorbeurs 6 connectée en série est par exemple suspendue au moyen de tiges métalliques (non visibles) sensiblement normales à l'axe longitudinal X et réparties de manière régulière pour supporter la charge des absorbeurs. Les moyens d'accrochage des absorbeurs 6 sont tels qu'ils permettent la dilatation des absorbeurs suivant leur longueur et leur largeur sans leur appliquer de contrainte ou le moins possible. Pour une centrale solaire ayant une puissance comprise entre 1 MWe et 10 MWe, le champ solaire est constitué de plusieurs lignes de récepteurs dont la longueur caractéristique est comprise entre 50 et 200 mètres.

A titre d'illustration non limitative, nous allons donner un exemple de réalisation pratique d'un boîtier selon la présente invention, tel que représenté sur la figure 1. Le boîtier de l'absorbeur de la figure 1 comporte deux modules I, II.

Un module présente une longueur de 2550 mm fabriqué à partir de tôles en acier inoxydable 316L d'épaisseur 2 mm. Deux modules formant un boîtier sont soudés pour délimiter un parallélépipède dont les dimensions extérieures sont les suivantes : une longueur de 5100 mm, une largeur de 202 mm et une épaisseur de 15 mm. Notons toutefois que le boitier peut présenter une épaisseur comprise entre 5 mm et 50 mm, par exemple entre 10 mm et 25 mm, et une largeur comprise entre 100 mm et 500 mm. Dans l'exemple de la figure 2, la tôle inférieure est cintrée formant d'un seul tenant la paroi inférieure 14.1 et les parois latérales, et la tôle supérieure, formant la paroi supérieure, est plane.

La nervure centrale 30 a une épaisseur de 2 mm et est soudée aux tôles inférieure et supérieure. La nervure centrale 6 est dans un premier temps soudée à la tôle inférieure. La tôle supérieure est munie d'encoches découpées dans lesquelles des surépaisseurs de la nervure viennent s'encastrer. La nervure 30 est ensuite soudée à la tôle supérieure par fusion des surépaisseurs.

La nervure centrale comporte des ailettes obtenues par pliage après prédécoupe de la nervure au moyen d'un laser. Les ailettes ont une longueur de 30 mm, elles sont situées tous les 150 mm et sont inclinées de 30° par rapport à l'axe X du module. La réalisation des ailettes a lieu préalablement à la fixation de la nervure centrale.

Nous allons maintenant décrire le fonctionnement d'une centrale solaire comportant un récepteur solaire selon la présente invention. Nous considèrerons un récepteur comportant un seul absorbeur.

La centrale comporte un récepteur selon la présente invention, des miroirs 42 pour réfléchir les rayons solaires vers l'absorbeur, un système d'alimentation en liquide du récepteur, un système de collecte du liquide échauffé en sortie du récepteur et des moyens de conversion thermodynamique qui incluent par exemple des turbines à vapeur, des turbines à gaz...

Le récepteur solaire est suspendu au-dessus des miroirs 42 représentés sur la figure 6. Ceux-ci réfléchissent le rayonnement solaire en direction du récepteur solaire 2, plus spécifiquement en direction de l'absorbeur 6. La jupe 6 du récepteur 2 redirige le flux lumineux F sur la face extérieure 6.1 de la paroi inférieure 14.1 du boîtier de l'absorbeur 6.

Le flux lumineux F échauffe la paroi inférieure 14.1, d'autant plus si elle est munie d'un revêtement adapté. Le fluide circulant dans le boîtier de l'absorbeur 6 étant en contact avec la face intérieure de la paroi inférieure 14.1, celui-ci est échauffé. A la sortie de l'absorbeur, le fluide échauffé est envoyé vers les moyens de conversion thermodynamique.

Le récepteur solaire selon la présente invention offre une efficacité améliorée par rapport aux récepteurs de l'état de la technique, puisque la surface de captation du flux lumineux est augmentée. En effet, la surface est plane et continue et ne comporte pas d'espaces vides. Les récepteurs de l'état de la technique comportent, au contraire, des "creux" entre les tuyaux. Outre une surface exposée au flux qui est maximale, l'invention évite de devoir gérer des échanges thermiques à l'arrière de l'absorbeur comme dans le cas des tubes où le flux passant dans les espaces entre tubes chauffe une surface qui échange ensuite avec la face arrière des tubes. Par ailleurs, grâce à la surface plane, les réémissions dans l'infrarouge sont réduites par rapport au cas de la surface développée des tubes de même largeur.

L'absorbeur est par ailleurs très efficace pour gérer des flux lumineux hétérogènes sur la surface exposée grâce au remélange qui a lieu au sein de l'absorbeur.

L'homogénéisation réduit les risques d'apparition de points chauds qui peuvent apparaitre dans les zones à très fort flux, cette homogénéisation de la température de paroi de l'absorbeur évite de dégrader l'huile thermique qui possède une température de film limite, un dépassement de cette limite entraînant une dégradation des performances ainsi qu'un risque d'augmentation de la viscosité et de formation de dépôts.

Elle permet de délivrer un fluide ayant une température homogène.

En outre, la durée de vie du traitement de surface est augmentée, puisque les valeurs de température maximale sont réduites.

De plus, le remélange du fluide caloporteur permet également une homogénéisation de la température des parois métalliques, ce qui a pour effet de réduire les déformations et les contraintes liées à la dilatation. La durée de vie de l'absorbeur, et donc celle du récepteur solaire, sont augmentées puisque ceux-ci subissent moins de fatigue thermique, réduisant les risques de fuite et de défaillance.

La présente invention s'applique aux récepteurs solaires de type Fresnel.

## Revendications

1. Module pour la réalisation d'un absorbeur thermique (6) pour récepteur solaire de centrale solaire de type Fresnel, d'axe longitudinal (X), comportant un conduit unique délimité par une première paroi (14.1) sensiblement plane munie d'une face (6.1) destinée à être soumise à un flux lumineux (F), une deuxième paroi (14.2) en regard de la première paroi et des parois latérales (16.1, 16.2) reliant lesdites première (14.1) et deuxième (14.2) parois, ledit module étant délimité au niveau de ses extrémités longitudinales par des plans transversaux d'extrémité au niveau desquels ledit module est destiné à être connecté à des modules amont et/ou aval et/ou à des collecteurs d'alimentation et/ou d'évacuation d'un fluide caloporteur destiné à s'écouler dans le module, ledit fluide caloporteur étant sous pression, ledit module comportant des moyens (28) reliant rigidement la première et la deuxième paroi, lesdits moyens étant disposés dans l'écoulement du fluide caloporteur et des moyens pour permettre l'écoulement du fluide caloporteur dans des directions inclinées par rapport à l'axe longitudinal (X), lesdites directions inclinées étant orientées vers les parois latérales (16.1, 16.2), de sorte qu'un mélange interne du fluide caloporteur soit assuré afin d'homogénéiser la température de sortie du fluide caloporteur et la température de la première paroi.

2. Module selon la revendication 1, dans lequel la pression du caloporteur dans le module est comprise entre 2 Bar et 6 Bar.

3. Module selon la revendication 1 ou 2, dans lequel les moyens pour permettre la circulation dans des directions inclinées par rapport à celle de l'axe longitudinal (X) comportent des déflecteurs (34) repartis dans le volume du module (12) et provoquant un changement de direction du fluide.

4. Module selon l'une des revendications 1 à 3, comportant au moins une nervure (30) s'étendant longitudinalement fixée à la première (14.1) et à la deuxième (14.2) paroi, ladite nervure (30) comportant des fenêtres (32) et des déflecteurs (34) associés aux fenêtres (32), lesdits déflecteurs (34) imposant à une partie du fluide d'emprunter lesdites fenêtres (32).

5. Module selon la revendication 4, dans lequel ladite au moins une nervure (30) s'étend longitudinalement sur toute la longueur dudit module (6), délimitant deux demi-canaux en communication fluidique.

6. Module selon la revendication 4 ou 5, dans lequel deux déflecteurs (34) successifs sont situés d'un côté et de l'autre du plan de la nervure (30) .

7. Module selon l'une des revendications 4 à 6, dans lequel la nervure (30) est soudée par un côté à la face intérieure de la première paroi (14.1), ladite nervure (30) comportant sur son côté soudé à la deuxième paroi (14.2) des créneaux (37) pénétrant dans des encoches réalisées dans ladite deuxième paroi (14.2).

8. Module selon l'une des revendications 1 à 7, dans lequel la face (6.1) destinée à être soumise au flux lumineux comporte un revêtement améliorant l'absorption du flux lumineux, de préférence ledit revêtement ayant des propriétés de faible émissivité infrarouge.

9. Absorbeur thermique (6) pour récepteur solaire de centrale solaire comportant un ou plusieurs modules selon l'une des revendications 1 à 8, les modules étant connectés en série de manière étanche, ledit absorbeur comportant à une première extrémité longitudinale (18.1) un collecteur d'alimentation (20) en fluide caloporteur et, à une deuxième extrémité longitudinale (18.2), un collecteur d'évacuation (22) du fluide caloporteur.

10. Récepteur solaire comportant au moins un absorbeur selon la revendication 9 et une jupe (4) formée de deux panneaux (4.1, 4.2) inclinés en éloignement de l'axe longitudinal (X) disposés de part et d'autre de l'absorbeur (6) par rapport à l'axe longitudinal (X), ladite jupe (4) redirigeant le flux lumineux sur l'absorbeur (6), ledit récepteur étant de type Fresnel.

11. Procédé de fabrication d'un absorbeur selon la revendication 9, comportant les étapes de :
- fabrication d'un ou plusieurs modules,
- fixation des moyens de liaison mécanique (28) aux première et deuxième parois et mise en place des moyens pour permettre la circulation dans des directions inclinées par rapport à l'axe longitudinal (X),
- d'assemblage des collecteurs d'alimentation et d'évacuation aux extrémités de l'ensemble formé par le module ou les modules.

12. Procédé de fabrication selon la revendication 11, dans lequel les moyens de liaison mécanique (28) et les moyens pour permettre la circulation dans des directions inclinées par rapport à celle de l'axe longitudinal (X) sont réalisés à partir d'une bande en alliage métallique :
- par découpe d'ailettes (34) dans la bande, lesdites ailettes (34) étant rattachées par un côté à la bande, et
- par pliage desdites ailettes (34) de sorte à ce qu'elles forment un angle (α) avec le plan de la bande, la réalisation desdites ailettes (34) formant simultanément des fenêtres (32) dans la bande.

13. Procédé de fabrication selon la revendication 11 ou 12, dans lequel la fixation des moyens de liaison mécanique (28) se fait par soudage.

14. Procédé de fabrication l'une des revendications 11 à 13, comportant une étape de traitement de surface de la face extérieure (6.1) de la première paroi (14.1), ledit traitement de surface étant avantageusement réalisé en peignant ladite face (6.1) après la fabrication du ou des modules.

15. Procédé de fabrication d'un récepteur solaire, ledit procédé comportant :
- l'étape de fabrication d'une pluralité d'absorbeurs par le procédé de fabrication selon l'une des revendications 11 à 14,
- l'étape de connexion étanche par soudage desdits absorbeurs (6) au niveau des collecteurs (20, 22) .

## Patentansprüche

1. Modul zur Realisierung eines thermischen Absorbers (6) für einen Solarempfänger einer Solarzentrale vom Fresneltyp, mit einer longitudinalen Achse (X), umfassend eine einzige Leitung, die begrenzt ist durch eine im Wesentlichen ebene erste Wand (14.1), die mit einer Fläche (6.1) ausgestattet ist, welche dazu ausgelegt ist einem Lichtfluss (F) ausgesetzt zu sein, eine zweite Wand (14.2) gegenüber der ersten Wand sowie Seitenwände (16.1, 16.2), die die erste (14.1) und die zweite (14.2) Wand miteinander verbinden, wobei das Modul im Bereich seiner longitudinalen Enden durch transversale Endebenen begrenzt ist, in deren Bereich das Modul dazu ausgelegt ist, mit stromaufwärtigen und/oder stromabwärtigen Modulen verbunden zu sein, und/oder mit Kollektoren zur Zuleitung und/oder Ableitung eines Wärmeträgerfluids, das dazu ausgelegt ist, in dem Modul zu strömen, wobei das Wärmeträgerfluid unter Druck ist, wobei das Modul Mittel (28) umfasst, die die erste und die zweite Wand starr miteinander verbinden, wobei die Mittel in der Strömung des Wärmeträgerfluids angeordnet sind, sowie Mittel zum Ermöglichen der Strömung des Wärmeträgerfluids in Richtungen, die bezüglich der longitudinalen Achse (X) geneigt sind, wobei die geneigten Richtungen zu den Seitenwänden (16.1, 16.2) hin derart geneigt sind, dass eine interne Mischung des Wärmeträgerfluids sichergestellt ist, um die Austrittstemperatur des Wärmeträgerfluids und die Temperatur der ersten Wand zu homogenisieren.

2. Modul nach Anspruch 1, bei dem der Druck des Wärmeträgers in dem Modul zwischen 2 bar und 6 bar enthalten ist.

3. Modul nach Anspruch 1 oder 2, bei dem die Mittel zum Ermöglichen der Zirkulation in Richtungen, die bezüglich jener der longitudinalen Achse (X) geneigt sind, Ablenkelemente (34) umfassen, die in dem Volumen des Moduls (12) verteilt sind und eine Richtungsänderung des Fluids bewirken.

4. Modul nach einem der Ansprüche 1 bis 3, umfassend wenigstens eine Rippe (30), die sich longitudinal erstreckt und an der ersten (14.1) und an der zweiten (14.2) Wand befestigt ist, wobei die Rippe (30) Fenster (32) und den Fenstern (32) zugeordnete Ablenkelemente (34) umfasst, wobei die Ablenkelemente (34) einen Teil des Fluids zwingen, durch die Fenster (32) zu fließen.

5. Modul nach Anspruch 4, bei dem sich die wenigstens eine Rippe (30) longitudinal über die gesamte Länge des Moduls (6) erstreckt und zwei Halbkanäle in Fluidkommunikation begrenzt.

6. Modul nach Anspruch 4 oder 5, bei dem zwei aufeinanderfolgende Ablenkelemente (34) auf der einen Seite und der anderen der Ebene der Rippe (30) angeordnet sind.

7. Modul nach einem der Ansprüche 4 bis 6, bei dem die Rippe (30) an einer Seite an die Innenfläche der ersten Wand (14.1) geschweißt ist, wobei die Rippe (30) an ihrer Seite, die an die zweite Wand (14.2) geschweißt ist, Zacken (37) umfasst, die in Einkerbungen eindringen, welche in der zweiten Wand (14.2) realisiert sind.

8. Modul nach einem der Ansprüche 1 bis 7, bei dem die Fläche (6.1), die dazu ausgelegt ist, dem Lichtfluss ausgesetzt zu sein, eine Beschichtung umfasst, die die Absorption des Lichtflusses verbessert, wobei die Beschichtung vorzugsweise schwache Infrarotemissionseigenschaften hat.

9. Thermischer Absorber (6) für einen Solarempfänger einer Solarzentrale, umfassend ein oder mehrere Module nach einem der Ansprüche 1 bis 8, wobei die Module auf dichte Weise in Reihe verbunden sind, wobei der Absorber an einem ersten longitudinalen Ende (18.1) einen Kollektor (20) zur Zuleitung von Wärmeträgerfluid umfasst, und an einem zweiten longitudinalen Ende (18.2) einen Kollektor (22) zur Ableitung des Wärmeträgerfluids.

10. Solarempfänger, umfassend wenigstens einen Absorber nach Anspruch 9 und eine Schürze (4), die aus zwei geneigten Platten (4.1, 4.2) im Abstand von der longitudinalen Achse (X) gebildet ist, die auf beiden Seiten des Absorbers (6) bezogen auf die longitudinale Achse (X) angeordnet sind, wobei die Schürze (4) den Lichtfluss auf den Absorber (6) umlenkt, wobei der Empfänger vom Fresneltyp ist.

11. Verfahren zur Herstellung eines Absorbers nach Anspruch 9, umfassend die Schritte:
- Herstellen eines oder mehrerer Module,
- Befestigen mechanischer Verbindungsmittel (28) an der ersten und der zweiten Wand und Platzieren der Mittel zum Ermöglichen der Zirkulation in Richtungen, die bezüglich der longitudinalen Achse (X) geneigt sind,
- Anbringen der Zuleitungs- und Ableitungskollektoren an den Enden der Gesamtheit, die durch das Modul oder die Module gebildet ist.

12. Herstellungsverfahren nach Anspruch 11, bei dem die mechanischen Verbindungsmittel (28) und die Mittel zum Ermöglichen der Zirkulation in Richtungen, die bezüglich jener der longitudinalen Achse (X) geneigt sind, ausgehend von einem Streifen aus einer Metalllegierung realisiert werden:
- durch Schneiden von Flügeln (34) in den Streifen, wobei die Flügel (34) an einer Seite an dem Streifen angebracht sind, und
- durch Falten der Flügel (34) derart, dass sie einen Winkel (α) mit der Ebene des Streifens bilden, wobei die Realisierung der Flügel (34) gleichzeitig Fenster (32) in dem Streifen bildet.

13. Herstellungsverfahren nach Anspruch 11 oder 12, bei dem die Befestigung der mechanischen Verbindungsmittel (28) durch Schweißen erfolgt.

14. Herstellungsverfahren nach einem der Ansprüche 11 bis 13, umfassend einen Schritt der Behandlung der Oberfläche der Außenfläche (6.1) der ersten Wand (14.1), wobei die Oberflächenbehandlung vorzugsweise durch Bemalen der Fläche (6.1) nach der Herstellung des Moduls oder der Module realisiert wird.

15. Verfahren zur Herstellung eines Solarempfängers, wobei das Verfahren umfasst:
- den Schritt der Herstellung einer Mehrzahl von Absorbern durch das Herstellungsverfahren nach einem der Ansprüche 11 bis 14,
- den Schritt der dichten Verbindung der Absorber (6) mittels Schweißen im Bereich der Kollektoren (20, 22).

## Claims

1. A module for the production of a thermal absorber (6) for a solar receiver of a solar power plant of the Fresnel type, with a lengthways axis (X), comprising a single duct delimiting by a first roughly flat wall (14.1) having a face (6.1) intended to be subjected to a luminous flux (F), a second wall (14.2) opposite the first wall, side walls (16.1, 16.2) connecting said first (14.1) and second (14.2) walls, where said module is delimited at its lengthways ends by transverse end planes at which points said module is configured to be connected to upstream and/or downstream modules, and/or to collectors for the supply and/or evacuation of a heat transfer fluid intended to flow in the module, said heat transfer fluid being pressurised, and said module comprising means (28) rigidly connecting the first and second walls, said means being positioned in the flow of the heat transfer fluid, and means to enable the heat transfer fluid to flow in directions which are inclined relative to the lengthways axis (X), said inclined directions being orientated to the side walls (16.1, 16.2) in such manner that a internal blending of the heat transfer fluid is ensured in order to homogenise the output temperature of the heat transfer fluid and the temperature of the first wall.

2. A module according to claim 1, in which the pressure of the heat transfer fluid in the module is between 2 Bar and 6 Bar.

3. A module according to claim 1 or 2, in which the means to enable flows in directions which are inclined relative to those of the lengthways axis (X) comprise deflectors (34) which are distributed throughout the volume of the module (12), and which cause the fluid to change direction.

4. A module according to one of claims 1 to 3, comprising at least one rib (30) extending lengthways, attached to the first (14.1) and to the second (14.2) wall, said rib (30) comprising windows (32) and deflectors (34) associated with the windows (32), said deflectors (34) causing a portion of the fluid to flow through said windows (32) .

5. A module according to claim 4, in which said at least one rib (30) extends in a lengthways direction along the entire length of said module (6), delimiting two half-channels which are in fluid communication.

6. A module according to claim 4 or 5, in which two deflectors (34) in succession are located on either side of the plane of the rib (30).

7. A module according to one of claims 4 to 6, in which the rib (30) is welded on one side to the internal face of the first wall (14.1), said rib (30) comprising on its side welded to the second wall (14.2) tabs (37) inserted into notches made in said second wall (14.2).

8. A module according to one of claims 1 to 7, in which the face (6.1) intended to be subjected to the luminous flux comprises a coating improving absorption of the luminous flux, the coating having preferably low infrared emissivity properties.

9. A thermal absorber (6) for a solar receiver of a solar power plant comprising one or more modules according to one of the claims 1 to 8, the modules being connected in series in sealed fashion, and said absorber comprising, at a first lengthways end (18.1), a heat transfer fluid supply collector (20) and, at a second lengthways end, a heat transfer fluid evacuation collector (22).

10. A solar receiver according to claim 19, which is of the Fresnel type.

11. A method of manufacturing an absorber according to claim 9, comprising the following steps:
- manufacture of one or more modules,
- attachment of the mechanical connection means (28) to the first and second walls, and installation of the means to enable flows in directions which are inclined relative to the lengthways axis (X),
- installation of the supply and evacuation collectors at the ends of the assembly formed by the module or modules.

12. A manufacturing method according to claim 11, in which the mechanical connection means (28) and the means to enable flows in directions inclined relative to that of the lengthways axis (X) are made from a metal alloy strip:
- by cutting vanes (34) from the strip, where said vanes (34) are attached on one side to the strip, and
- by folding said vanes (34) such that they form an angle (α) with the plane of the strip, where the production of said vanes (34) simultaneously forms windows (32) in the strip.

13. A manufacturing method according to claim 11 or 12, in which the mechanical connection means (28) are attached by welding.

14. A manufacturing method according to one of claims 11 to 13, comprising a step of surface treatment of the outer face (6.1) of the first wall (14.1), said surface treatment being advantageously accomplished by painting said face (6.1) after manufacturing the module or modules.

15. A method of manufacturing a solar receiver, where said method comprises:
- the step of manufacturing multiple absorbers by the manufacturing method according to claims 11 to 14,
- the step of sealed connection by welding of said absorbers (6) by their collectors (20, 22).
